# EUROPÄISCHE PATENTSCHRIFT

(11) **EP 0 924 829 B1**
(45) Veröffentlichungstag und Bekanntmachung des Hinweises auf die Patenterteilung: **19.09.2001**
(21) Anmeldenummer: 98123257.2
(22) Anmeldetag: 07.12.1998
(51) Int. Cl.: H02G 3/10

(54) **Geräteanbaueinheit für Leitungsführungskanäle**
Adapter for cable channels
Dispositif de connexion pour conduites de câbles

(30) Priorität: 17.12.1997 DE 29722284 U
(43) Veröffentlichungstag der Anmeldung: 23.06.1999
(73) Patentinhaber: Tehalit GmbH & Co. KG, 67716 Heltersberg (DE)
(72) Erfinder: Scherer, Peter Dipl.-Ing., 67657 Kaiserslautern (DE)
(74) Vertreter: Patentanwälte Möll und Bitterich

(56) Entgegenhaltungen:
- EP-A- 0 440 556
- US-A- 3 546 360

## Beschreibung

Die Erfindung betrifft Anordnungen einer Geräteanbaueinheit für Leitungsführungskanäle gemäß dem Oberbegriff des Anspruchs 1.

Leitungsführungskanäle für die sichere und saubere Führung von elektrischen Starkstrom- und Schwachstromleitungen von einem zentralen Anschluss, z. B. einem Verteiler- oder Unterverteilerkasten, zu den Verbrauchern sind seit über 100 Jahren bekannt und in Gebrauch. Man vergleiche z. B. die US 378 561 aus dem Jahr 1888. Sie bestehen aus einem meist trogförmigen Unterteil, welches je nach Bedarf an Boden, Wand oder Decke eines Gebäudes befestigt wird, und einem Oberteil, welches auf das Unterteil aufgerastet wird. Je nach dem Verwendungszweck unterscheidet man beispielsweise Sockelleistenkanäle, Brüstungskanäle, Fensterbankkanäle usw.

Diese Kanäle können außer elektrischen Leitungen auch Rohrleitungen aufnehmen, insbesondere Heizungsrohre. Man vergleiche z. B. DE-U 295 00 112.

Es ist bekannt, an die in den Kanälen verlegten Leitungen Elektroinstallationsgeräte, beispielsweise Steckdosen, Lichtschalter, Sicherungen usw. anzuschließen. Werden die Geräte im Kanal selbst befestigt, so schränken sie den für die Leitungsführung zur Verfügung stehenden Freiraum mehr oder weniger stark ein. Man vergleiche beispielsweise die AU-A 25 369/71 oder die GB-A 569 697.

Häufig werden deshalb die Elektroinstallationsgeräte neben den Kanälen montiert, wobei besondere Geräteanbaueinheiten verwendet werden. Man vergleiche beispielsweise GB-A 21 37 025, FR-B 24 88 064, DE-B 27 23 287, DE-A 20 52 438 oder DE-A 34 12 038. Diese Geräteanbaueinheiten bestehen üblicherweise aus einem Unterteil, welches neben dem Kanal an Boden, Wand und/oder Decke befestigt wird und für die Aufnahme des Elektroinstallationsgerätes vorbereitet ist, und einem Oberteil, welches das Unterteil und/oder das Elektroinstallationsgerät abdeckt. Sitzt die Geräteanbaueinheit unmittelbar neben dem Leitungsführungskanal, so deckt das Oberteil meist auch den Kanal selbst ab. Besteht zwischen Leitungsführungskanal und Geräteanbaueinheit ein größerer Abstand, ist üblicherweise ein Abzweigkanal vorgesehen, wobei Leitungsführungskanal und Geräteanbaueinheit entsprechend angepasst werden.

Aus der EP-A 0 440 556 ist eine Unterputz-Einbaudose bekannt, mit deren Hilfe Elektroinstallationsgeräte flächenbündig in Wände eingebaut werden können, wobei die Stromversorgung aus einem auf Putz verlegten Leitungsführungskanal erfolgt. Die Einbaudose besteht aus einem Fuß, einer vom Fuß beabstandeten Montagedose, einem Fuß und Montagedose verbindenden Verbindungskanal und einer auf den Verbindungskanal aufrastbaren Abdeckung. Die Einbaudose wird in eine entsprechend große Aussparung in der Wand so eingesetzt, dass ihre Vorderfront flächengleich mit der Wand abschließt. Der auf der Wand verlegte Leitungsführungskanal wird im Bereich der Einbaudose unterbrochen, damit die elektrischen Leitungen in den Verbindungskanal eingeführt werden können.

Nachteilig ist an dieser Konstruktion die in der Gebäudewand vorzusehende Aussparung, die so großflächig und tief sein muss, dass die Einbaudose ganz darin verschwindet. Solche Aussparungen lassen sich beispielsweise in Fertigbetonwänden, wie sie im modernen Hochbau weitgehend verwendet werden, mit vertretbarem Aufwand nicht mehr herstellen. Die Anwendung der vorbekannten Einbaudose ist daher sehr beschränkt.

Nachteilig ist auch der Zwang, den Leitungsführungskanal im Bereich der Einbaudose zu unterbrechen und die Unterbrechung anschließend durch einen Kanaldeckel, der auch die Seitenwände des Kanalunterteils ganzflächig überdeckt, wieder zu verschließen.

Da die Elektroinstallationsgeräte bestimmte, meist genormte Abmessungen haben, stehen die Fronten der Elektroinstallationsgeräte bzw. der diese abdeckenden Oberteile der Geräteanbaueinheit weit über die Befestigungsebene vor, wenn Leitungsführungskanal und Geräteanbaueinheit auf derselben, eine sogenannte Befestigungsebene bildenden Oberfläche von Boden, Wand und/oder Decke montiert sind. Sie sind dadurch verstärkt Beschädigungen ausgesetzt. Außerdem bieten sie oft einen ästhetisch wenig befriedigenden Anblick. Man vergleiche die Abbildungen in den oben genannten Schriften.

Aus der EP-A 0 721 245 ist ein Leitungsführungskanal bekannt, dessen Unterteil Aussparungen aufweist, in die eine Geräteeinbaudose, vergleichbar einer herkömmlichen Unterputzdose, eingesetzt werden kann. Im Bereich dieser Geräteeinbaudose wird in die Wand, auf der der Kanal befestigt ist, ein Loch gebohrt, in das die Dose eintauchen kann. Dadurch gelingt es, die sichtbare Front des ElektroInstallationsgerätes in die Ebene des Kanaloberteils zu legen, so dass diese seltener beschädigt werden. Allerdings ist der für die Leitungsführung zur Verfügung stehende Freiraum im Leitungsführungskanal noch mehr beschränkt als zuvor.

Neben der soeben beschriebenen Kanalinstallation ist die Unterputz-Installation von Leitungen verbreitet. Hierzu werden Schlitze in Putz und Mauerwerk gefräst. Nachdem Leerrohre oder auch Leitungen eingelegt wurden, werden die Schlitze wieder zugeputzt An den Enden der Leerrohre bzw. Leitungen werden Unterputzdosen gesetzt, in die je nach Bedarf Steckdosen, Lichtschalter, Verteilerklemmen usw. eingesetzt werden.

Vorteilhaft an der Unterputz-Verlegung ist, dass nur die Geräte sichtbar sind, die auch zugänglich sein müssen, wie Steckdosen und Lichtschalter. Nachteilig ist jedoch, dass eine nachträgliche Erweiterung der Installation nur mit großem Aufwand und mit erheblicher Schmutzentwicklung möglich ist.

In Gebäuden, die unter Verwendung von Betonfertigelementen errichtet werden, ist eine nachträgliche Erweiterung der Unterputz-Installation praktisch unmöglich.

Der vorliegenden Erfindung liegt die Aufgabe zugrunde, eine Anordnung einer Geräteanbaueinheit anzugeben, mit deren Hilfe es möglich ist, einen optimalen Freiraum für die Leitungsverlegung im Leitungsführungskanal zu verbinden mit einer optisch und ästhetisch ansprechenden Gestaltung.

Diese Aufgabe wird gelöst durch eine Anordnung mit den Merkmalen des Anspruchs 1.

Die vorliegende Erfindung greift auf das Grundprinzip zurück, das Elektroinstallationsgerät wenigstens teilweise in Boden, Wand bzw. Decke zu versenken. Dank der Anordnung der Geräteanbaueinheit neben dem Leitungsführungskanal und auf der Befestigungsebene des Leitungsführungskanals besteht jedoch eine sehr viel größere Freiheit beim Unterbringen der Elektroinstallationsgeräte. Bevorzugt werden schon vorhandene Vertiefungen, beispielsweise die Unterputzdosen der herkömmlichen Unterputzinstallation, weiter verwendet. Auch bleibt der Innenraum der Leitungsführungskanäle völlig frei.

Die erfindungsgemäße Geräteanbaueinheit kann beispielsweise mit Dübeln und Schrauben befestigt werden, so wie es bei den Leitungsführungskanälen der Fall ist. Falls sie jedoch in eine Unterputzdose eingesetzt werden kann, sind gemäß einer Ausgestaltung der Erfindung Spreizklammem vorgesehen. Dank dieser Anordnung kann das Installationsgerät an derselben Stelle montiert werden, an der es bisher montiert war, wobei die Stromversorgung jetzt über den Leitungsführungskanal erfolgt.

Gemäß einer Weiterbildung der Erfindung ist die Geräteanbaueinheit zur Verbindung mit einem Abzweig- oder Verbindungskanal ausgerüstet. Diese Kanäle werden üblicherweise mit einem kleineren Querschnitt ausgeführt als die eigentlichen Leitungsführungskanäle, da sie nur eine Verbindungsleitung aufnehmen. Gemäß einer bevorzugten Weiterbildung der Erfindung ist die Geräteanbaueinheit als Anschlußadapter ausgerüstet, der die Kanal-Installation mit einer in der Unterputzdose endenden Unterputz-Installation verbindet. Auf diese Weise ist es möglich, die Kanal-Installation aus der Unterputz-Installation zu speisen oder umgekehrt. Insbesondere besteht so die Möglichkeit, eine bestehende Unterputz-Installation flexibel zu erweitern, ohne größere Bauarbeiten vornehmen zu müssen.

Es versteht sich, dass die erfindungsgemäße Geräteanbaueinheit sich auch mit einer herkömmlichen Hohlraum-Installation verbinden lässt.

Weitere Ausgestaltungen der Erfindung sind Gegenstand der restlichen Unteransprüche.

Anhand der Zeichnung soll die Erfindung in Form zweier Ausführungsbeispiele näher erläutert werden. Es zeigen
- Fig. 1: in perspektivischer Darstellung einen Ausschnitt aus einem Wand-Boden-Bereich mit einem ersten Sockelleistenkanal,
- Fig. 2: einen Schnitt durch die Anordnung der Fig. 1 im Bereich einer Unterputzdose,
- Fig. 3: in perspektivischer Darstellung einen Ausschnitt aus einem Wand-Boden-Bereich mit einem zweiten Sockelleistenkanal und
- Fig. 4: einen Schnitt durch die Anordnung der Fig. 3 im Bereich einer Unterputzdose.

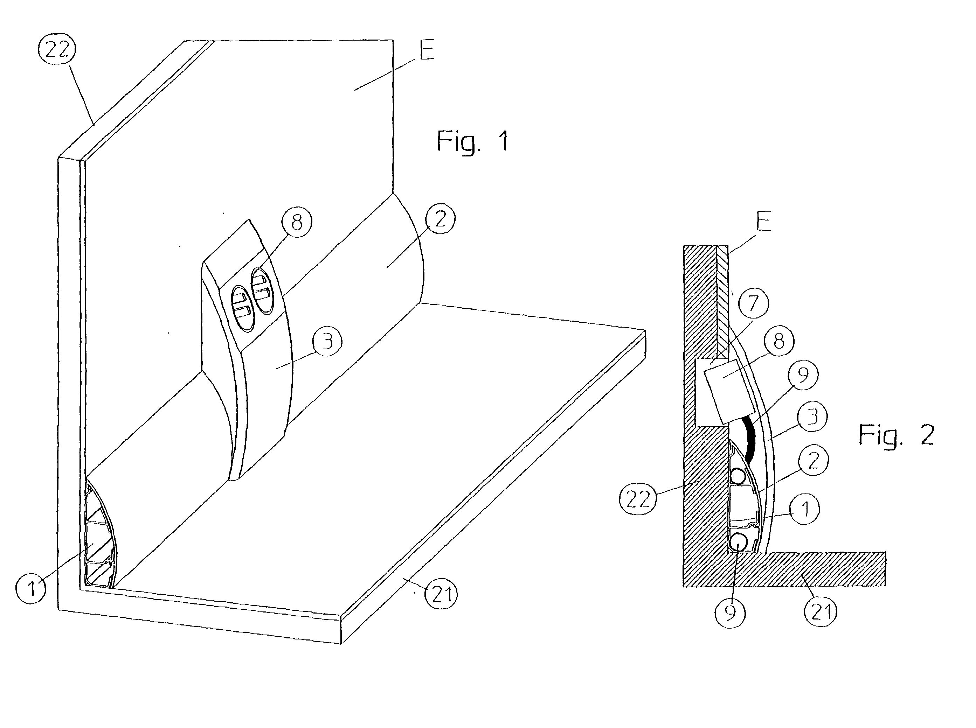

Die Fig. 1 und 2 als perspektivische Ansicht bzw. als Schnitt zeigen einen ersten Sockelleistenkanal, bestehend aus einem Kanalunterteil 1, befestigt an einer Wand 22, und einem damit korrespondierenden Kanaloberteil 2. Die Oberfläche der Wand 22, auf der das Kanalunterteil 1 befestigt ist, bildet eine Befestigungsebene E.

Oberhalb des Leitungsführungskanals 1, 2 ist eine Geräteanbaueinheit 3 montiert. Diese besteht aus einem Unterteil, auf dem ein Elektro-Installationsgerät 8, hier eine Doppelsteckdose, montiert ist. Ein Oberteil deckt sowohl das Unterteil wie das Elektro-Installationsgerät 8 als auch den Leitungsführungskanal 1, 2 ab. Dadurch entsteht ein Freiraum, durch den elektrische Leitungen 9, die im Leitungsführungskanal 1, verlegt sind, unsichtbar zum Elektro-Installationsgerät 8 gezogen werden können.

Wie Fig. 2 erkennen läßt, befindet sich in der Wand 22 hinter dem Elektro-Installationsgerät 8 eine Vertiefung, vorzugsweise eine Unterputzdose. In diese taucht das Elektro-lnstallationsgerät 8 teilweise ein. Dadurch steht die Front des Elektroinstallationsgeräte 8 nur noch wenig über die Befestigungsebene E über und die Einheit aus Leitungsführungskanal 1, 2 und Geräteanbaueinheit 3 mit Elektro-Installationsgerät erhält ein schlankes, ästhetisch ansprechendes Aussehen.

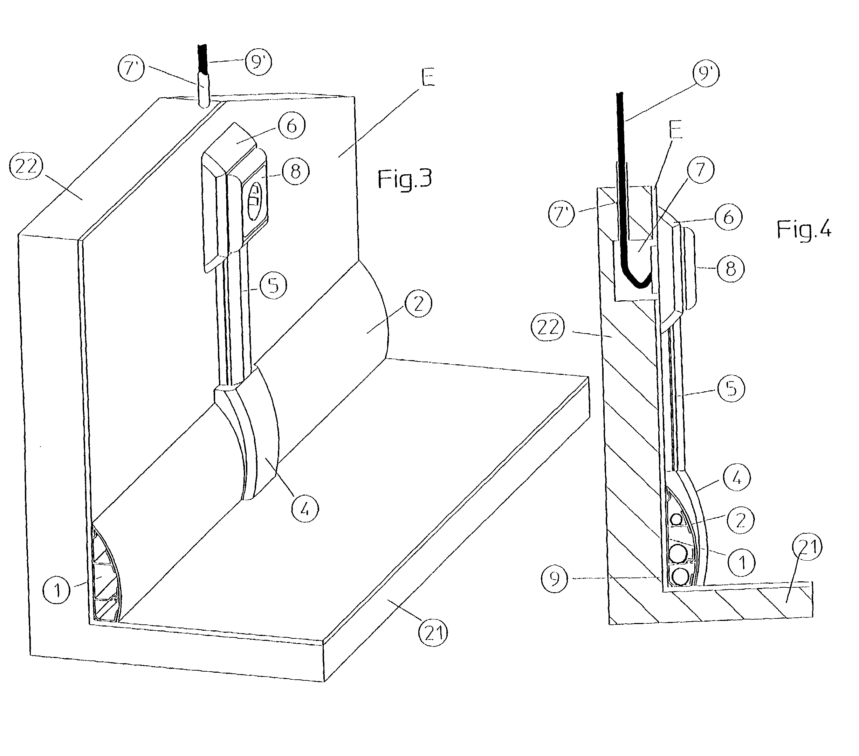

Die Fig. 3 und 4 als perspektivische Ansicht bzw. als Schnitt zeigen einen zweiten Sockelleistenkanal, ebenfalls bestehend aus einem Kanalunterteil 1 und einem Kanaloberteil 2, befestigt an der Wand 22. Eine Geräteanbaueinheit 6 mit einem Elektro-Installationsgerät 8 in Form einer Einfachsteckdose befindet sich in einigem Abstand neben dem Leitungsführungskanal 1, 2. Aus diesem Grunde ist ein Abzweig- bzw. Verbindungskanal 5 vorgesehen. Im Bereich des Sockelleistenkanals 1, 2 endet der Verbindungskanal 5 an einem Installationskanal-Adapter 4, welcher die Systemtrennung herstellt und auch die Schnittkaschierung für das Kanaloberteil 2 übernimmt. Der Verbindungskanal 5 kann einen erheblich kleineren Querschnitt haben als der Sockelleistenkanal 1, 2, da er üblicherweise nur ein Speisekabel aufzunehmen hat.

Wie Fig. 4 erkennen läßt, sitzt die Geräteanbaueinheit 6 über einer Unterputzdose 7, in die sie teilweise eintaucht. Die Steckdose 8, die zuvor in der Unterputzdose 7 befestigt war, sitzt nun auf der Geräteanbaueinheit 6.

In der Wand 22 befindet sich eine herkömmliche Unterputz-Installation, dargestellt durch ein Stück Leerrohr 7', in der einen elektrische Leitung 9' verlegt ist. Die Unterputzleitung 9' ist in die Geräteanbaueinheit 6 geführt und dort mit der im Sockelleistenkanal 1, 2 verlegten Leitung 9 verbunden. Die Geräteanbaueinheit 6 bildet auf diese Weise einen Anbindungsadapter, der die Kanalinstallation 9 mit der herkömmlichen Unterputz-Installation 9' verbindet. Dabei ist es möglich, die Kanalinstallation aus der Unterputz-Installation zu speisen; es besteht jedoch die Möglichkeit, die Unterputz-Installation aus der Kanalinstallation zu speisen.

Dieselben Vorteile stellen sich auch dann ein, wenn statt einer Unterputz-lnstallation eine Hohlwand-Installation vorliegt.

Dank der vorliegenden Erfindung ist ein integriertes Aufputz-Unterputz-Hohlraum-Installationssystem entstanden. Die Verbindung zwischen den Installationsarten kann schnell und sauber vorgenommen werden. Beschädigungen von Wand, Tapete usw. entfallen, Stemm- und Verputzarbeiten sind entbehrlich. Insbesondere lassen sich Hohlraum- und Unterputz-Installationen, die bisher nur schwer oder gar nicht erweitert werden konnten, jetzt sehr flexibel erweitern.

## Patentansprüche

1. Anordnung einer Geräteanbaueinheit (3, 6) an einer mit einer Aussparung versehenen Befestigungsebene (E) auf Boden (21), Wand (22) und/oder Decke, wobei an der Befestigungsebene (E) das Unterteil (1) eines im wesentlichen aus einem Kanalunterteil (1) und aus einem korrespondierenden Kanaloberteil (2), bestehenden Leitungsführungskanals (1, 2) befestigt ist,
- wobei die Geräteanbaueinheit im wesentlichen ein Unterteil umfasst,
- welches neben dem Leitungsführungskanal (1, 2) befestigt ist,
- und mit dem Leitungsführungskanal (1, 2) in Verbindung steht
- und vorbereitet zur Aufnahme wenigstens eines Elektroinstallationsgerätes (8) ist,
- und wobei das Unterteil
- teilweise in eine Aussparung (7), z. B. eine Hohlwand- oder Unterputzdose, in Boden (21), Wand (22) bzw. Decke eintaucht,
**dadurch gekennzeichnet, dass**
- die Geräteanbaueinheit ein Oberteil umfasst, welches Unterteil und/oder Elektroinstallationsgerät (8) überdeckt und
- dass das Unterteil der Geräteanbaueinheit teilweise nach hinten über die Befestigungsebene (E) des Leitungsführungskanals (1, 2) hinausragt.

2. Anordnung nach Anspruch 1, **gekennzeichnet durch** das Merkmal:
- Spreizklammern dienen zur Befestigung der Geräteanbaueinheit in der Hohlwand- oder Unterputzdose.

3. Anordnung nach Anspruch 1 oder 2, **gekennzeichnet durch** das Merkmal:
- die Geräteanbaueinheit ist zur Verbindung mit einem Abzweigkanal (5) ausgerüstet.

4. Anordnung nach Anspruch 1, 2 oder 3, **gekennzeichnet durch** das Merkmal:
- Anschlussklemmen stellen Verbindungen mit elektrischen Leitungen (9, 9') her.

5. Anordnung nach einem der Ansprüche 1 bis 4, **gekennzeichnet durch** das Merkmal:
- die Geräteanbaueinheit ist als Anschlussadapter ausgerüstet, der die Kanalinstallation (9) mit einer in der Hohlwand- oder Unterputzdose (7) endenden Hohlwand- oder Unterputz-Installation (9') verbindet.

6. Anordnung nach einem der Ansprüche 1 bis 5, **gekennzeichnet durch** das Merkmal:
- der Leitungsführungskanal (1, 2) ist ein Sockelleistenkanal.

7. Anordnung nach einem der Ansprüche 1 bis 5, **gekennzeichnet durch** das Merkmal:
- der Leitungsführungskanal (1, 2) ist ein Brüstungskanal.

8. Anordnung nach einem der Ansprüche 1 bis 5, **gekennzeichnet durch** das Merkmal:
- der Leitungsführungskanal (1, 2) ist ein Fensterbankkanal.

## Claims

1. Arrangement of an appliance add-on unit (3, 6) at a fastening plane (E), provided with a recess, on a floor (21), wall (22) and/or ceiling, wherein the lower part (1) of wiring trunking (1, 2), consisting essentially of a trunking lower part (1) and of a corresponding trunking upper part (2), is fastened to the fastening plane (E),
- wherein the appliance add-on unit essentially comprises a lower part,
- which is fastened next to the wiring trunking (1, 2),
- and is connected to the wiring trunking (1, 2)
- and is prepared to accommodate at least one electrical installation appliance (8),
- and wherein the lower part
- partly enters a recess (7), e. g. a cavity-wall or flush box, in the floor (21), wall (22) or ceiling,
**characterised in** the
- appliance add-on unit comprises an upper part which covers the lower part and/or electrical installation appliance (8), and
- that the lower part of the appliance add-on unit projects partly to the rear beyond the fastening plane (E) of the wiring trunking (1, 2).

2. Arrangement according to Claim 1, **characterised by** the feature:
- expanding clips serve to fasten the appliance add-on unit in the cavity-wall or flush box.

3. Arrangement according to Claim 1 or 2, **characterised by** the feature:
- the appliance add-on unit is equipped for connection to branch trunking (5).

4. Arrangement according to Claim 1, 2 or 3, **characterised by** the feature:
- connecting terminals establish connections with electric lines (9, 9').

5. Arrangement according to any one of Claims 1 to 4, **characterised by** the feature:
- the appliance add-on unit is equipped as a connecting adapter which connects the trunking installation (9) to a cavity-wall or flush installation (9') which terminates in the cavity-wall or flush box (7).

6. Arrangement according to any one of Claims 1 to 5, **characterised by** the feature:
- the wiring trunking (1, 2) is skirting trunking.

7. Arrangement according to any of Claims 1 to 5, **characterised by** the feature:
- the wiring trunking (1, 2) is dado trunking.

8. Arrangement according to any of Claims 1 to 5, **characterised by** the feature:
- the wiring trunking (1, 2) is still-type trunking.

## Revendications

1. Agencement d'un module de raccordement en saillie (3, 6) contre un plan de fixation (E) muni d'un évidement, posé sur le sol (21), un mur (22) et/ou le plafond, la partie inférieure (1) d'une goulotte de guidage de câbles (1, 2), qui est formée sensiblement par une partie inférieure de goulotte (1) et une partie supérieure de goulotte (2) correspondante, étant fixée contre le plan de fixation (E),
- le module de raccordement en saillie comportant sensiblement une partie inférieure,
- qui est fixée à côté de la goulotte de guidage de câbles (1, 2),
- et communique avec la goulotte de guidage de câbles (1, 2),
- et est préparée pour recevoir au moins un dispositif pour installation électrique (8),
- et la partie inférieure
- pénétrant partiellement dans un évidement (7), tel qu'un réceptacle en paroi creuse ou un réceptacle d'encastrement, réalisé dans le sol (21), le mur (22) ou le plafond,
**caractérisé en ce que**
- le module de raccordement en saillie comporte une partie supérieure, qui masque la partie inférieure et/ou le dispositif pour installation électrique (8) et
- la partie inférieure du module de raccordement en saillie s'engage partiellement vers l'arrière au-dessus du plan de fixation (E) de la goulotte de guidage de câbles (1, 2).

2. Agencement selon la revendication 1, **caractérisé en ce que** :
- des pinces expansibles sont utilisées pour fixer le module de raccordement en saillie dans le réceptacle en paroi creuse ou le réceptacle d'encastrement.

3. Agencement selon la revendication 1 ou 2, **caractérisé en ce que** :
- le module de raccordement en saillie est équipé pour être relié à un canal de dérivation (5).

4. Agencement selon la revendication 1, 2 ou 3,
**caractérisé en ce que** :
- des bornes de connexion établissent la liaison avec des câbles électriques (9, 9').

5. Agencement selon l'une quelconque des revendications 1 à 4, **caractérisé en ce que** :
- le module de raccordement en saillie est conçu sous forme d'adaptateur de raccordement, qui relie l'installation électrique de la goulotte (9) avec une installation électrique (9') à monter en paroi creuse ou à encastrer qui se termine dans le réceptacle en paroi creuse ou le réceptacle d'encastrement (7).

6. Agencement selon l'une quelconque des revendications 1 à 5, **caractérisé en ce que** :
- la goulotte de guidage de câbles (1, 2) est une goulotte pour plinthe.

7. Agencement selon l'une quelconque des revendications 1 à 5, **caractérisé en ce que** :
- la goulotte de guidage de câbles (1, 2) est une goulotte pour balustrade.

8. Agencement selon l'une quelconque des revendications 1 à 5, **caractérisé en ce que** :
- la goulotte de guidage de câbles (1, 2) est une goulotte pour appui de fenêtre.
